**Europäisches Patentamt**

**European Patent Office**

**Office européen des brevets**

(19)

(11) Veröffentlichungsnummer : **0 118 389**
**B1**

(12) **EUROPÄISCHE PATENTSCHRIFT**

(45) Veröffentlichungstag der Patentschrift :
30.12.86

(51) Int. Cl.⁴ : **H 02 B 15/02**

(21) Anmeldenummer : **84730004.3**

(22) Anmeldetag : **24.01.84**

(54) Elektrisches Schaltgerät zur Überwachung und Steuerung von Schaltverbindungen.

(30) Priorität : **03.02.83 DE 3303652**

(43) Veröffentlichungstag der Anmeldung :
**12.09.84 Patentblatt 84/37**

(45) Bekanntmachung des Hinweises auf die Patenterteilung : **30.12.86 Patentblatt 86/52**

(84) Benannte Vertragsstaaten :
**AT BE CH DE IT LI NL SE**

(56) Entgegenhaltungen :
**AU-B-    7 993**
**DE-A- 2 033 509**
**DE-C-   905 390**
**FR-A- 1 144 822**
**FR-A- 2 366 722**

(73) Patentinhaber : **Siemens Aktiengesellschaft Berlin und München**
**Wittelsbacherplatz 2**
**D-8000 München 2 (DE)**

(72) Erfinder : **Buurman, Eberhard, Dipl.-Ing.**
**Kierner Strasse 18**
**D-1000 Berlin 33 (DE)**
Erfinder : **Fahrenkrog-Petersen, Dieter**
**Radelandstrasse 104a**
**D-1000 Berlin 20 (DE)**
Erfinder : **Meusel, Otto**
**Aufsessstrasse 18**
**D-8520 Erlangen (DE)**

EP 0 118 389 B1

Jouve, 18, rue St-Denis, 75001 Paris, France

**Beschreibung**

Die Erfindung bezieht sich auf ein elektrisches Schaltgerät zur Überwachung und Steuerung von Schaltverbindungen mit einer Frontplatteneinheit aus einer Anzahl Untereinheiten zur Aufnahme von Schaltverbindungen zugeordneten Anzeige- und Steuerelementen, wobei die Frontplatten der Untereinheiten gleiche Abmessungen aufweisen.

Bei einem bekannten Schaltgerät dieser Art (Siemens-Druckschrift « Schaltfehlerschutz für Hoch- und Mittelspannungs-Schaltanlagen », Bestell-Nr. E 139/1717) sind auf einem Montierrahmen eine Anzahl von Bausteinen in vertikaler Richtung aneinandergereiht, die jeweils zur Anzeige und Steuerung einer Schaltverbindung in einer elektrischen Energieversorgungsanlage betätigt werden können. Gleichzeitig wird beispielsweise über eine Rückmeldung vom entsprechenden Schaltkontakt mit einem Anzeigeelement der Zustand dieser Schaltverbindung (Schalter geöffnet/Schalter geschlossen) auf der Frontplatte des jeweiligen Bausteins dargestellt. Das Schaltgerät ist hierzu über externe Anschlußklemmen und entsprechende Verbindungsleitungen mit den einzelnen Schaltkontakten (Schütze oder dergleichen) verbunden. Auf der Frontplatteneinheit des Schaltgeräts ist in einer Art Blindschaltbild der Verlauf des Strompfades, in dem sich die Schaltverbindungen befinden, dargestellt, so daß der jeweilige Schaltzustand in der gesamten zu überwachenden Anlage oder Teilen davon jederzeit beobachtet werden kann. Beim bekannten elektrischen Schaltgerät sind aufgrund der unterschiedlichen Anordnungen ‘ der Schaltverbindungen im Strompfad unterschiedliche Frontplattenanordnungen notwendig, so daß für jede Anlagenkonfiguration entsprechende Bausteine anzufertigen sind oder zumindest eine große Anzahl von unterschiedlichen Standardkonfigurationen bereitgehalten werden muß.

Bei einem weiteren bekannten Schalgerät (FR-A-11 44 822) weist die Frontplatte ebenfalls mehrere Untereinheiten auf, die auf ihrer Frontplatte nicht nur ein Blindschaltbild als Nachbildung des betreffenden Abzweiges der Schaltanlage sondern auch Vorbereitungsschalter als Steuerelemente und Anzeigelemente enthalten. Die Frontplatten der Untereinheiten haben zwar gleiche Abmessungen, sind aber unterschiedlich ausgebildet ; auch die Anordnung der Steuerelemente und der Anzeigelemente zueinander und an den Frontplatten ist von Untereinheit zu Untereinheit unterschiedlich. Auch bei diesem Schaltgerät sind also je nach Anlagenkonfiguration unterschiedliche Untereinheiten anzufertigen.

Der Erfindung liegt die Aufgabe zugrunde, ein elektrisches Schaltgerät zu schaffen, bei dem eine weitgehende Standardisierung der einzelnen Untereinheiten und eine große Variabilität dieser Untereinheiten hinsichtlich der Überwachung und Steuerung von Schaltverbindungen in relativ komplexen Anlagen erreicht ist.

Zur Lösung dieser Aufgabe werden bei einem elektrischen Schaltgerät der eingangs angegebenen Art erfindungsgemäß die den jeweils einzelnen Schaltverbindungen zugeordneten Anzeige- und Steuerelemente zu Baugruppen gleicher Ausführung zusammengefaßt, so daß die Anzeige- und Steuerelemente aller Baugruppen sich jeweils an gleichen Stellen in einem vorgegebenen Raster auf den Baugruppen und somit auf der Frontplatteneinheit befinden, und die Frontplatten der Untereinheiten weisen im Verlauf ihrer streifenförmigen Ausdehnung die Baugruppen in einer Linie nebeneinander auf.

Mit dem erfindungsgemäßen Aufbau des elektrischen Schaltgeräts kann in vorteilhafter Weise eine Frontplatteneinheit aufgebaut werden, die nach Vorlage eines entsprechenden Blindschaltbildes der Strompfade und der Schaltverbindungen aus standardisierten Baugruppen und Untereinheiten zusammengesetzt werden kann. Insbesondere dadurch, daß sich die Anzeigeelemente jeder Baugruppe an einer durch die erfindungsgemäße Ausbildung der Frontplatten vorgegebenen Stelle auf der Frontplatteneinheit befinden, können somit auf einfache Weise die Verläufe der zu schaltenden Strompfade der Frontplatteneinheit nachgebildet werden. Die einzelnen Baugruppen sind untereinander gleich und können nach Herausnehmen der jeweiligen Untereinheit problemlos ausgetauscht werden. Falls die Baugruppen an hinter den Frontplatten der jeweiligen Untereinheit angebrachten Schaltungsplatinen befestigt werden, ist es lediglich erforderlich, auf diesen Platinen entsprechend vorgestanzte Befestigungslöcher bzw. -schlitze im Raster der Abmessungen der Baugruppen vorzusehen.

In vorteilhafter Weise sind auf der Rückseite der Frontplatte einer jeden Untereinheit Einprägungen vorhanden, die der Lage und den Ausmaßen der Anzeige- und Steuerelemente an den Baugruppen entsprechen, und die mit den Einprägungen gekennzeichneten Stellen sind herausdrückbar, wodurch Löcher zur Durchführung der Anzeige- und Steuerelemente auf die Vorderseite der jeweiligen Frontplatte entstehen. Hierdurch ist eine weitere Vereinfachung bei der Anbringung der einzelnen Baugruppen möglich, da bei einem bekannten Blindschaltbild auf der Frontplatteneinheit lediglich an den Stellen, an denen sich die Schaltverbindungen befinden, die entsprechenden Löcher für die Anzeige- und Steuerelemente herauszudrücken sind.

Bei einem Schaltgerät mit einem Stellungsmelder auf jeweils einer Baugruppe als ein Anzeigeelement für den Zustand der zu steuernden elektrischen Schaltverbindung weist der Stellungsmelder einen um 90° drehbaren, auf der Vorderseite der Frontplatte sichtbaren dunklen Balken auf. Dieses bekannte Schaltgerät wird in vorteilhafter Weise dadurch verbessert, daß auf der Vorderseite der Frontplatte parallel zur streifenförmigen Ausdehnung eine erste streifenförmige Prägung angebracht ist, die den Drehpunkt des dunklen Balkens bei eingebrachtem Stellungsmelder kreuzt, im rechten Winkel zur ersten Prägung weitere Prägungen angebracht sind, die ebenfalls jeweils einen der Drehpunkte kreuzen, und daß in die Prägungen dunkle Einlagen einbringbar sind, die den Verlauf eines elektrischen Strompfades kennzeichnen, wobei der dunkle Balken des Stellungsmelders im Falle einer Unterbrechung des Strompfades quer zu seinem Verlauf steht und im Falle einer geschlossenen Verbindung sich im Verlauf des Strompfades befindet. Die Herstellung eines Blindschaltbildes auf der Vorderseite des Schaltgeräts ist durch diese jeweils im gleichen Raster angebrachten Prägungen als Schlitze besonders einfach, da unter Vorlage des bekannten Stromverlaufs lediglich dunkle Einlagen in die Schlitze einzubringen sind, deren Verlauf durch die Stellungsmelder als Anzeigeelemente optisch unterbrechbar ist. Durch die jeweils mit gleichem Rastermaß aufgebauten Frontplatten der Untereinheiten ergibt sich somit ein zusammenhängendes, sich über die ganze Frontplatteneinheit erstreckendes Blindschaltbild der zu überwachenden Schaltverbindungen. Die Steuerelemente zur Betätigung der jeweiligen Kontakte der Schaltverbindungen befinden sich direkt neben den Stellungsmeldern, so daß der Wirkungszusammenhang eindeutig erkennbar ist.

Um eine genaue Ausrichtung der Frontplatten der einzelnen Untereinheiten untereinander und somit eine hervorragende optische Darstellung des jeweiligen Blindschaltbildes zu gewährleisten, sind in vorteilhafter Weise an den Seiten der Frontplatten, die an jeweils benachbarte Frontplatten der Frontplatteneinheit grenzen, Ausnehmungen und Zapfen derart angebracht, daß beim Zusammenfügen der Frontplatten der Zapfen jeweils einer Frontplatte in eine entsprechende Ausnehmung der benachbarten Frontplatte eingreift. Um den optischen Eindruck der gesamten Frontplatteneinheit nicht zu stören, können diese Zapfen und Ausnehmungen an den Enden der Frontplatten angebracht werden, die eventuell mit Verriegelungsblenden ohnehin verdeckt werden.

Es ist zwar aus der DE-C-905 390 bekannt, zusammenzufügende plattenförmige Teile an ihren aneinander stoßenden Rändern mit seitlichen Rillen zu versehen, jedoch handelt es sich hierbei um Schaltbildzeichen und Verbindungsstreifen, die zu einem Schaltbild mit Hilfe einer Guß- oder Preßmasse zusammengefügt sind und zur sicheren Halterung in der Masse die seitlichen Rillen aufweisen.

Die Erfindung wird anhand der Figuren dargestellt, wobei

Figur 1 eine Vorderansicht eines Ausführungsbeispiels eines elektrischen Schaltgeräts,

Figur 2 eine Untereinheit zur Aufnahme der Baugruppen und

Figur 3 die Rückansicht einer Frontplatte einer Untereinheit darstellen.

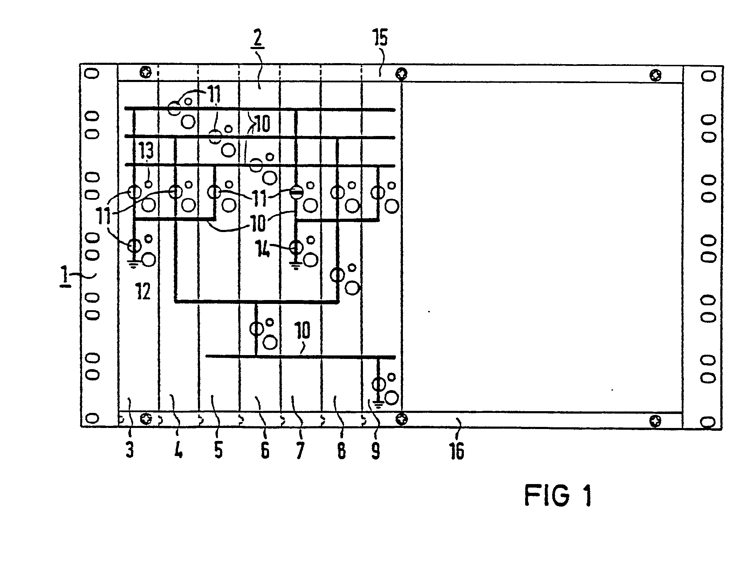

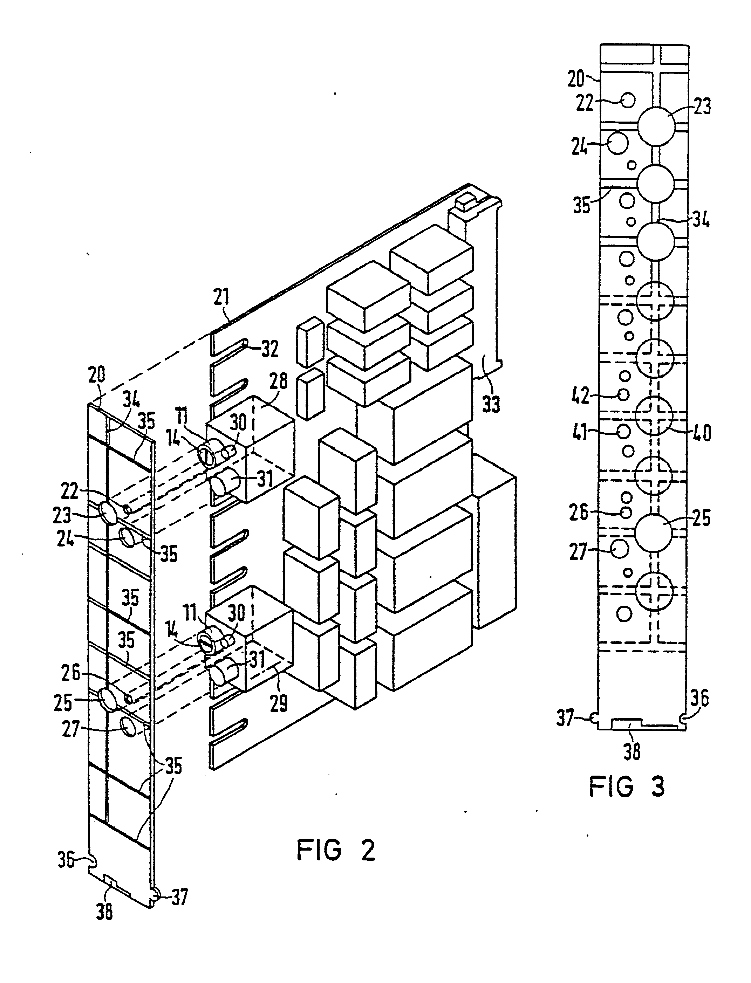

In der Figur 1 ist ein Einschubrahmen 1 eines elektrischen Schaltgeräts dargestellt, in dem sich eine Frontplatteneinheit 2 befindet, die aus Untereinheiten 3 ... 9 zusammengesetzt ist. Die Untereinheiten 3 ... 9 weisen jeweils eine Frontplatte (vergleiche Frontplatte 20 nach Figur 2) auf, die im vertikalen Verlauf streifenförmig ausgebildet ist. Auf den Frontplatten der Untereinheiten 3 ... 9 ist durch dunkle Einlagen ein Stromverlauf 10 nachgebildet. Das aus diesem Stromverlauf 10 gebildete Blindschaltbild enthält durch Stellungsmelder 11 gekennzeichnete Schaltverbindungen, die durch Steuerelemente 12 betätigt werden können. Weiterhin sind auf der Frontplatteneinheit 2 weitere Anzeigeelemente 13 vorhanden, die zusätzliche Überwachungsfunktionen der einzelnen Schaltverbindungen erfüllen können. Die Stellungsmelder 11 enthalten einen drehbaren dunklen Balken 14, der den Zustand der jeweiligen Schaltverbindung (geschlossen/geöffnet) anzeigt. Die Untereinheiten der Frontplatteneinheit 2 sind mit Verriegelungsblenden 15 und 16 am Einschubrahmen 1 des elektrischen Geräts gehalten. Das gezeigte elektrische Gerät ist über externe Anschlußklemmen (hier nicht dargestellt) und gesonderte Verbindungsleitungen mit den entsprechenden Schaltverbindungen, beispielsweise in einer Energieversorgungsanlage, verbunden, wobei die zu überwachende Anlage einen Stromverlauf aufweist, der dem Blindschaltbild auf der Frontplatteneinheit 2 entspricht. Die Betätigung der Schaltkontakte (z. B. Schütze) der entsprechenden Schaltverbindungen kann somit über die Steuerelemente 12 vorgenommen werden, und die Rückmeldung des Zustandes der Schaltverbindung wird mittels der Stellungsmelder 11 angezeigt.

In der Figur 2 ist eine Untereinheit dargestellt, wie sie Bestandteil einer Frontplatteneinheit der in der Figur 1 dargestellten Art sein könnte. Es ist eine Frontplatte 20 vorhanden, die an einer Schaltungsplatine 21 zu befestigen ist und die Löcher 22 ... 24 bzw. 25 ... 27 zur Durchführung der Steuer- und Anzeigeelemente jeweils einer Baugruppe 28 und einer Baugruppe 29 aufweist. Als Anzeigeelemente sind jeweils Stellungsmelder 11 und Leuchtelemente 30 vorhanden ; als Steuerelemente sind Druckschalter 31 an der Baugruppe 28 bzw. 29 angebracht. Die Schaltungsplatine 21 weist Prägungen als Befestigungsschlitze 32 auf, die in einem vorgegebenen Raster angeordnet sind, so daß die Baugruppen 28 bzw. 29 jeweils in den Schlitzen, gegebenenfalls in einer Linie direkt hintereinander, befestigt werden können und sich somit in einem vorgegebenen Raster auf der Platine befinden. Auf der Schaltungsplatine 21 sind ferner weitere Bauelemente (hier nicht näher erläutert) untergebracht, die die Weiterverarbeitung der von einer Anschlußklemme 33 gelieferten Signale von der zu überwachenden Anlage bzw. eine Weiterverarbeitung der von den Anzeige- und Steuerelementen abgegebenen Signale bewirken.

Auf der Vorderseite der Frontplatte 20 befindet sich ein erster Schlitz 34, der parallel zur streifenförmigen Ausdehnung der Frontplatte 20 verläuft, und weitere Schlitze 35, die rechtwinklig zum ersten Schlitz 34 verlaufen. Die Schlitze 34 und 35 der Frontplatte 20 sowie die Befestigungsschlitze 32 auf der Schaltungsplatine 21 für die Baugruppen 28 bzw. 29 sind in gleicher Weise in einem vorgegebenen Raster angeordnet, so daß sich bei Aufstecken der Frontplatte 20 auf die Schaltungsplatine 21 die Schlitze 34 und 35 im Drehpunkt des dunklen Balkens 14 der Stellungsmelder 11 kreuzen würden. Für den Fall, daß an der entsprechenden Stelle des Blindschaltbildes eine Schaltverbindung vorgesehen ist, kann mit dem dunklen Balken 14 des Stellungsmelders 11 eine Unterbrechung oder eine Schließung des auf der Vorderseite der Frontplatte 20 angezeigten Strompfades dargestellt werden. An den in der Figur 2 dunkel gezeichneten Teilen der Schlitze 34 und 35 sind hier dunkle Einlagen in die Schlitze eingebracht, die den Verlauf des Strompfades des Blindschaltbildes kennzeichnen.

Die Frontplatte 20 gemäß der Figur 2 ist an ihrem unteren Ende derart mit einer Ausnehmung 36 und einem Zapfen 37 versehen, daß bei Zusammenfügung mehrerer Frontplatten zu einer Frontplatteneinheit jeweils der Zapfen 37 in die benachbarte Ausnehmung 36 der benachbarten Frontplatte eingreift und unverrückbar gehalten werden kann und so ein gleichmäßiger Verlauf der Schlitze über mehrere Frontplatten verschiedener Untereinheiten hinweg gewährleistet ist.

Am unteren Ende der Frontplatte 20 ist darüber hinaus eine Ausnehmung 38 vorhanden, in die der Widerhaken eines nicht dargestellten Ausziehwerkzeuges eingreifen kann, mit dem die Untereinheit aus dem Einschubrahmen herausziehbar ist.

In der Figur 3 ist eine Rückansicht der Frontplatte 20 dargestellt, bei der die Schlitze 34 und 35 gestrichelt dargestellt (nicht sichtbar) sind. Auf der Rückseite sind hier Einprägungen vorgenommen, die den gleichen Durchmesser haben wie die Anzeigeelemente (Stellungsmelder 11 und Leuchtelement 30) und das Steuerelement 31 der Baugruppe 28 bzw. 29 (vergleiche Figur 2) und sich an den Stellen befinden, an denen bei Aufstecken der Frontplatte 20 auf eine entsprechende Schaltungsplatine 21 die Anzeige- und Steuerelemente der Baugruppen zu liegen kommen würden. Bei einem hier dargestellten Ausführungsbeispiel sind lediglich die Teile aus den Einprägungen herausgedrückt, die der Lage der Baugruppen 28 und 29 gemäß der Figur 2 entsprechen, so daß die Löcher 22 ... 24 und 25 ... 27 zur Durchführung der Anzeige- und Steuerelemente entstehen.

## Patentansprüche

1. Elektrisches Schaltgerät zur Überwachung und Steuerung von Schaltverbindungen mit einer Frontplatteneinheit (2) aus einer Anzahl Untereinheiten (3 ... 9) zur Aufnahme von Schaltverbindungen zugeordneten Anzeige- und Steuerelementen (11, 30 ; 31), wobei die Frontplatten der Untereinheiten (3 ... 9) gleiche Abmessungen aufweisen, dadurch gekennzeichnet, daß

die den jeweils einzelnen Schaltverbindungen zugeordneten Anzeige- und Steuerelemente zu Baugruppen (28, 29) gleicher Ausführung zusammengefaßt sind, so daß

die Anzeige- und Steuerelemente (11, 30 ; 31) aller Baugruppen (28, 29) sich jeweils an gleichen Stellen in einem vorgegebenen Raster auf den Baugruppen (28, 29) und somit auf der Frontplatteneinheit (2) befinden und daß

die Frontplatten der Untereinheiten (3 ... 9) in Verlauf ihrer streifenförmigen Ausdehnung die Baugruppen (28, 29) in einer Linie nebeneinander aufweisen.

2. Elektrisches Schaltgerät nach Anspruch 1, dadurch gekennzeichnet, daß

auf der Rückseite der Frontplatte einer jeden Untereinheit (3 ... 9) Einprägungen vorhanden sind, die der Lage und den Ausmaßen der Anzeige- und Steuerelemente an den Baugruppen (28, 29) entsprechen, und daß

die mit den Einprägungen (40, 41, 42) gekennzeichneten Stellen herausdrückbar sind, wodurch Löcher (25, 26, 27 ; 22, 23, 24) zur Durchführung der Anzeige- und Steuerelemente auf die Vorderseite der jeweiligen Frontplatte entstehen.

3. Elektrisches Schaltgerät nach Anspruch 1 oder 2 mit einem Stellungsmelder (11) auf jeweils einer Baugruppe (28, 29) als ein Anzeigeelement für den Zustand der zu steuernden elektrischen Schaltverbindung, das einen um 90° drehbaren, auf der Vorderseite der Frontplatte sichtbaren dunklen Balken (14) aufweist, dadurch gekennzeichnet, daß

auf der Vorderseite der Frontplatte parallel zur streifenförmigen Ausdehnung eine erste streifenförmige Prägung (34) angebracht ist, die den Drehpunkt des dunklen Balkens (14) bei eingebrachtem Stellungsmelder (11) kreuzt,

im rechten Winkel zur ersten Prägung weitere Prägungen (35) angebracht sind, die ebenfalls jeweils einen der Drehpunkte kreuzen, und daß

in die Prägungen dunkle Einlagen einbringbar sind, die den Verlauf eines elektrischen Strompfades kennzeichnen, wobei

der dunkle Balken (14) des Stellungsmelders (11) im Falle einer Unterbrechung des Strompfades quer zu seinem Verlauf steht und im Falle einer geschlossenen Verbindung sich im Verlauf des Strompfades befindet.

4. Elektrisches Schaltgerät nach einem der vorhergehenden Ansprüche, dadurch gekennzeichnet, daß

an den Seiten der Frontplatten, die an jeweils benachbarte Frontplatten der Frontplatteneinheit (2) grenzen, Ausnehmungen (36) und Zapfen (37) derart angebracht sind, daß

beim Zusammenfügen der Frontplatten der Zapfen (37) jeweils einer Frontplatte in eine entsprechende Ausnehmung (36) der benachbarten Frontplatte eingreift.

## Claims

1. Electrical switching apparatus for the supervision and control of switching connections comprising a front plate unit (2) comprising a number of sub-units (3 ... 9) for the accommodation of display and control elements (11, 30 ; 31) which are assigned to switching connections, where the front plates of the sub-units (3 ... 9) have the same dimensons, characterised in that

the display and control elements assigned to the individual switching connections are combined to form assemblies (28, 29) of the same design, so that

the display and control elements (11, 30 ; 31) of all assemblies (28, 29) are respectively present at the same locations in a predetermined raster on the assemblies (28, 29) and therefore on the front plate unit (2), and that

the front plates of the sub-units (3 ... 9) have the assemblies (28, 29) in a line beside one another in the course of their strip-shaped extension.

2. Electrical switching apparatus as claimed in claim 1, characterised in that

at the rear of the front plate of each sub-unit (3 ... 9) are arranged impressions which correspond to the position and the dimensions of the display and control elements on the assemblies (28, 29), and that

the locations marked with the impressions (40, 41, 42) can be pushed out whereby apertures (25, 26, 27 ; 22, 23, 24) for passing through the display and control elements to the front of the respective front plate are formed.

3. Electrical switching apparatus as claimed in claim 1 or 2, comprising a position indicator (11) on each assembly (28, 29) as a display element for the state of the electrical switching connection which is to be controlled, which display element has a dark bar (14) which is rotatable by 90° and visible on the front of the front plate, characterised in that

on the front of the front plate, parallel to the strip-shaped extension is arranged a first strip-shaped imprint (34) which intersects the point of rotation of the bar (14) when the position indicator (11) is inserted,

further imprints (35) which likewise respectively intersect one of the points of rotations are arranged at right-angles to the first imprint, and that

dark inserts which mark the course of an electric current path be inserted into the imprints, where

in the event of an interruption of the current path the dark bar (14) of the position indicator (11) is transverse to its course and in the event of a closed connection it is positioned in the course of the current path.

4. Electrical switching apparatus as claimed in one of the preceding claims, characterised in that

on the sides of the front plates, which respectively border on adjacent front plates of the front plate unit (2), are arranged recesses (36) and pins (37) in such a manner that when the front plates are joined together the pin (37) of each front plate respectively engages into a corresponding recess (36) of the adjacent front plate.

## Revendications

1. Appareil de commutation électrique pour la surveillance et la commande de connexions de commutation, comprenant un ensemble à plaques frontales (2), constitué d'un certain nombre de sous-ensembles (3 ... 9), destiné à recevoir des éléments d'indication et de commande (11, 30 ; 31) coordonnés à des connexions de commutation, dans lequel les plaques frontales des sous-ensembles (3 ... 9) possèdent les mêmes dimensions, caractérisé en ce que

les éléments d'indication et de commande coordonnés à une connexion de commutation donnée sont réunis en un bloc (28, 29), les différents blocs ayant la même exécution, de manière que

les éléments d'indication et de commande (11, 30 ; 31) de tous les blocs sont situés chaque fois, dans une grille prédéterminée, aux mêmes endroits sur les blocs (28, 29) et par suite sur l'ensemble à plaques frontales (2), et que

les plaques frontales des sous-ensembles (3 ... 9) présentent les blocs (28, 29) en une ligne les uns à côté des autres à l'intérieur de leur étendue en forme de bande.

2. Appareil selon la revendication 1, caractérisé en ce que

le côté arrière de la plaque frontale de chaque sous-ensemble (3 ... 9) porte des empreintes qui correspondent à l'emplacement et aux dimensions des éléments d'indication et de commande sur les blocs (28, 29)

et que les portions des plaques frontales délimitées par les empreintes (40, 41, 42) peuvent être enlevées par pression, ce qui crée des trous (25, 26, 27 ; 22, 23, 24) pour faire passer les éléments d'indication et de commande sur le côté avant de la plaque frontale concernée.

3. Appareil selon la revendication 1, avec, sur chaque bloc (28, 29), en tant qu'élément d'indication de l'état de la connexion de commutation électrique à commander, un indicateur de position (11) présentant une barre sombre (14) visible sur le côté avant de la plaque frontale et pouvant être tournée de 90°, caractérisé en ce que

le côté avant de la plaque frontale présente, parallèlement à son étendue en forme de bande, une première empreinte (34) en forme de rainure, qui croise le point de rotation de la barre sombre (14) au cas où un indicateur de position (11) a été mis en place,

que d'autres empreintes (35) sont formées à angle droit par rapport à la première empreinte, qui croisent chacune également l'un des points de rotation,

et que les empreintes peuvent recevoir des garnitures sombres qui indiquent un trajet de courant électrique,

la barre sombre (14) de l'indicateur de position (11) étant orientée transversalement au trajet du courant en cas d'interruption de celui-ci et la barre étant orientée suivant le tracé de ce trajet si la connexion est établie.

4. Appareil selon une des revendications précédentes, caractérisé en ce que

des encoches (36) et des tenons (37) sont disposés sur les bords des plaques frontales qui sont adjacents à des plaques frontales voisines de l'ensemble à plaques frontales (2), de manière que,

à l'assemblage des plaques frontales, le tenon (37) d'une plaque pénètre chaque fois dans une encoche (36) correspondante de la plaque voisine.

FIG 1

FIG 2

FIG 3